Europäisches Patentamt

European Patent Office

Office européen des brevets

(19)

(11) Publication number: **0 071 864**
A1

# EUROPEAN PATENT APPLICATION

(21) Application number: **82106741.0**

(22) Date of filing: **26.07.82**

(51) Int. Cl.³: **B 65 H 3/32**, B 65 G 59/02

(30) Priority: **07.08.81 IT 1260381**

(43) Date of publication of application: **16.02.83**
**Bulletin 83/7**

(84) Designated Contracting States: **AT BE CH DE FR GB LI LU NL SE**

(71) Applicant: **GIBEN IMPIANTI S.p.A., 24, Via Garganelli, I-40065 Pianoro (Bologna) (IT)**

(72) Inventor: **Benuzzi, Gino, Via Angelo Custode 5, I-40141 Bologna (IT)**

(74) Representative: **Porsia, Dino, Dr. et al, c/o Succ. Ing. Fischetti & Weber Via Caffaro 3, I-16124 Genova (IT)**

(54) **A device for the automatic feeding of a stack of panels.**

(57) The invention relates to a device for transferring automatically stacks of panels, particularly thin and flexible panels, from a supply station where the panels are piled on a lifting table, to any machining line. The device comprises a presser member (14) which is pressed against the top of the pile (P) in order to bring the underlying stack of panels into a planar condition and into close contact with each other. Then, into the pile of panels there is introduced a wedge (22) which, together with the presser member, forms a clamp that firmly clamps a stack (A) of a predetermined number of panels. The assembly of the presser member and wedge is then translated towards the machining table to transfer the stack of panels thereto. Said assembly is then opened and the presser member and wedge are brought to a rest position, thereafter it is lifted and finally it is brought again above the pile, is lowered thereon and the cycle will be repeated automatically.

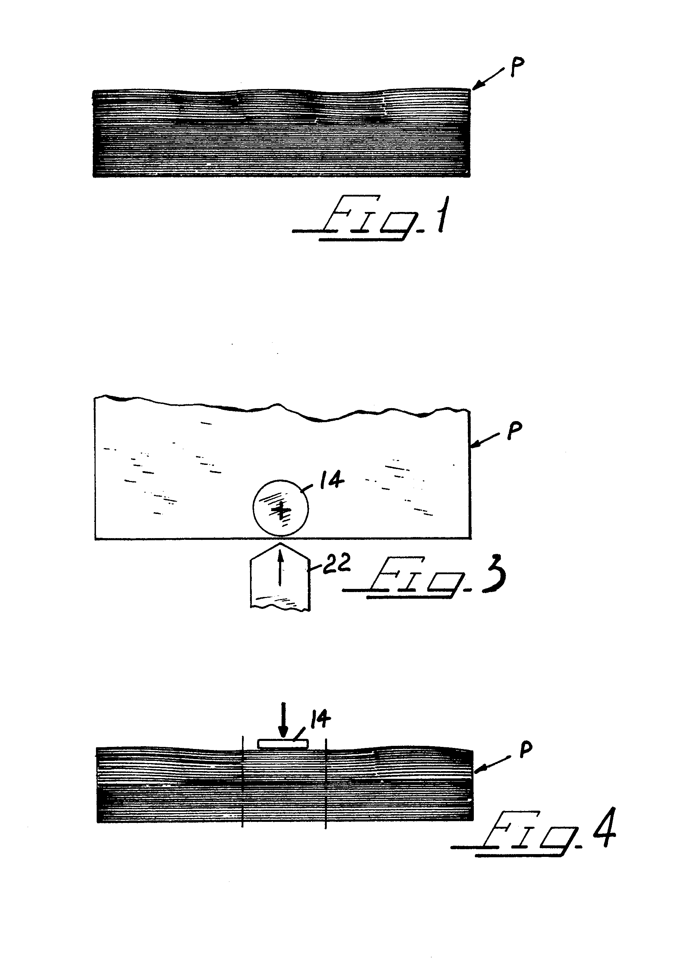

This invention relates to a device for supplying automatically to any machining line, for example a size cutting machine, a stack of panels, even if they are very thin and flexible, removing them from a feeding station where said panels are piled on a lifting table. Figure 1 of the accompanying drawings shows diagrammatically in side elevational view a pile P of panels of the specified nature. This Figure evidences that, due to the non-uniform thickness of the panels and due to non-uniform surface tensions generated in the panels during or after their manufacture, the top panels of the pile P will have an undulated configuration. In order to feed stacks of such panels to a machining table, devices are now used which operate by a shaving action on the top of the pile, but which require a manual conditioning of the pile upon each operative cycle thereof. The stack of panels to be removed from the top of the pile is spaced from the remaining lower portion of the pile by inserting into the pile suitable wedge-shaped tools which are sometimes provided with sliding rollers. If the supply of panels is to be completely automatic, suction feeders are used which pick up the panels, one by one, from the top of the pile and form a stack in a stand-by station, taking advantage generally of the machining time required for the stack of panels fed in the preceding step. These devices require an additional station, i.e. the mentioned stand-by station, which requires an additional floor space substantially equivalent to that of the lifting table which supports the pile of panels.

The object of this invention is to overcome the drawbacks and limitations resulting from the known devices just mentioned above, by providing a device which is adapted to transfer, by a single operative step, a stack of panels from the top of the pile to any support table facing said pile without requiring either any manual action on the pile or any larger floor space for the apparatus to which the device is associated.

The above and other features of the invention, and the advantages resulting therefrom, will be apparent from the following detailed description of a preferred embodiment thereof, shown in the Figures of the accompanying drawings where:

Figure 1 shows a pile of panels in side elevational view;

Figure 2 is a side elevational view of the device according to the invention, with some parts broken away;

Figure 3 is a diagrammatic top plan view of the two main components of the device, in the operative relationship with the pile of panels;

Figure 4 shows the effect of the pressor means of the device on the pile of panels, the pile being shown in elevational view from the front side facing the machining line to which the stacks of panels are to be transferred;

Figures 5, 6 and 7 are side elevational views of the two main components of the device, in three operative positions with respect to the pile of panels, respectively;

Figure 8 shows further constructional details of the device, sectioned along line VIII-VIII of Figure 2.

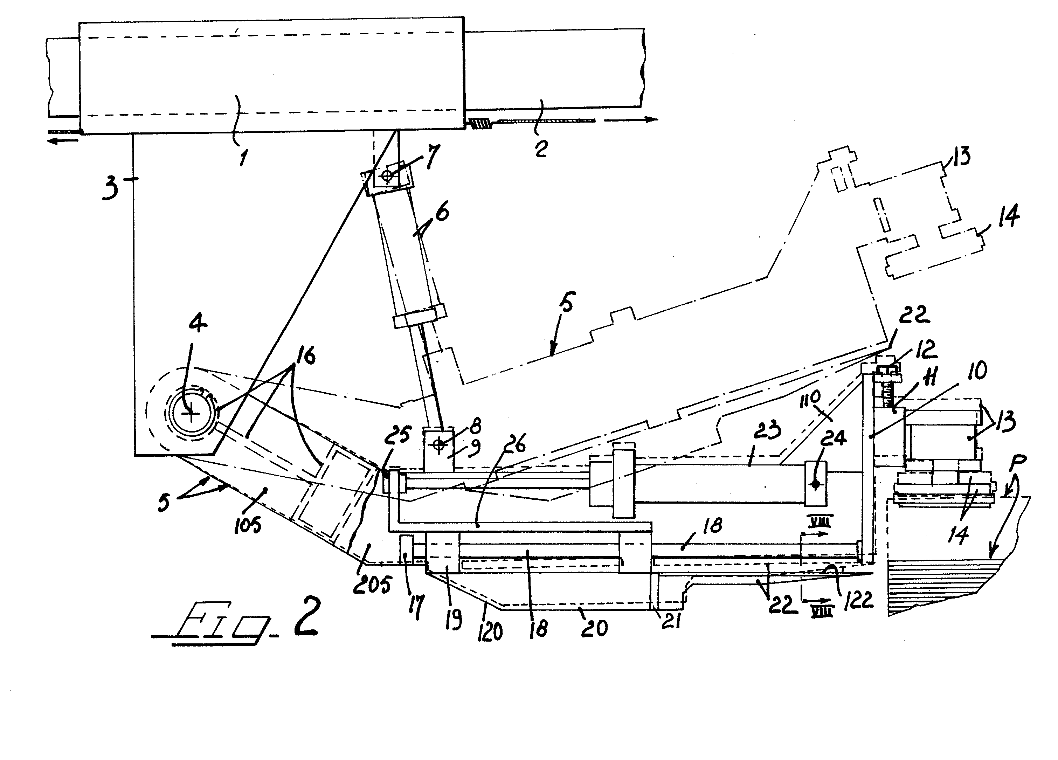

In Figure 2 it can be seen that the device according to the invention comprises a carriage 1 that, by suitable actuating means (not shown) can be caused to slide reciprocatingly on a horizontal rectilinear guide 2 supported overhead by suitable supports and of such a length and positioned so as to permit the carriage to reciprocate between the pile of panels which is supported on a lifting table and a receiving station of the machining line to which a stack of said panels is to be transferred. The carriage 1 fixedly carries therebelow a structure 3 to which there is pivotably mounted at 4 an end of an arm 5 which is actuated by a fluid-operated jack 6. The body of the jack 6 is pivoted at 7 to the carriage, and the rod thereof is pivoted at 8 to a support 9 which is fixed to an intermediate portion of said arm 5. By means of the jack 6 and with the aid of abutments (not shown), the arm 5 can be moved to, and maintained in the positions shown in figure 2 either with solid line or with dot-and-dash line. To the outer end of the arm 5 there is fixed plate 10 strengthened by gussets 110, and a slide 11 can move upwards and downwards thereon, the extent of this movement being controlled by a screw 12. To the slide 11 there is fixed the body of a jack 13 of comparatively large diametre, which is directed downwards and is provided with a presser plate 14. When the arm is in the position shown with solid lines in Figure 2, the presser plate 14 is positioned horizontally.

The arm 5 is formed by a pair of identical parallel plates 105-205 which are positioned edgewise and are fixed to each other by said plate 10 and by members 16 and an intermediate cross-member 17.

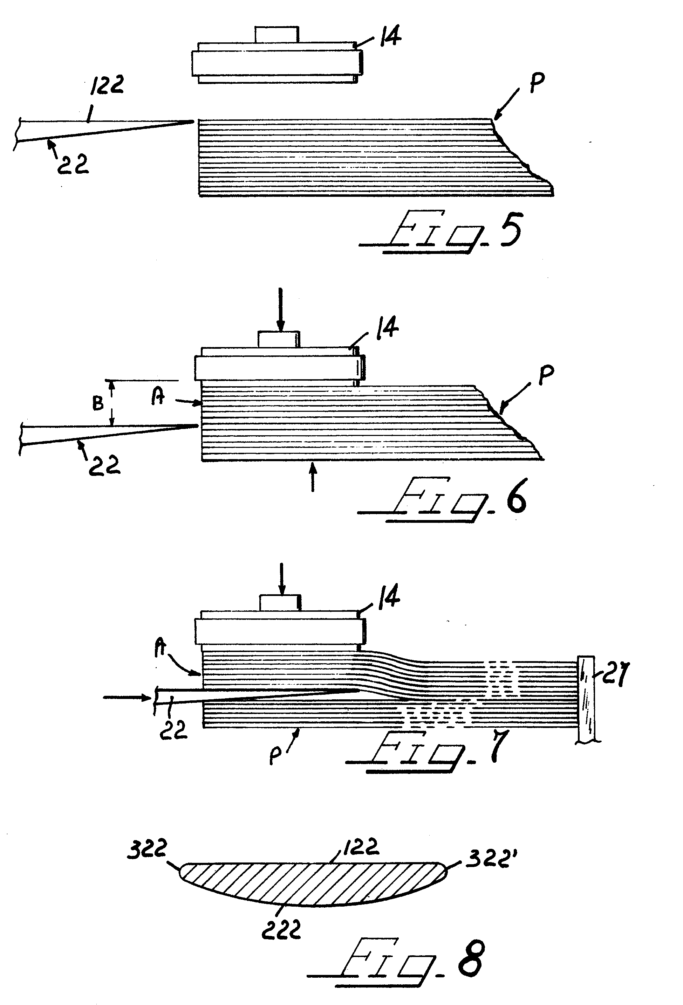

To the elements 17 and 10 there are fixed the ends of a rod 18 located longitudinally intermediate the space existing between the plates 105-205 and on an imaginary plane parallel to that of the presser member 14. Slidably mounted on the rod 18 are bushings 19 to the lower side of which there is fixed a tubular member 20 having a tapered end 120 and provided at the other end with lugs 21 to which there is fixed by means of screws one end of a wedge member 22 of suitable length. The top surface 122 of the wedge 22 is parallel to the undersurface of the presser plate 14, and as shown in Figure 3 said wedge is characterized in that, in top plan view, it has a pointed free end. Moreover, it is to be noted that said wedge 22 is made of any material having high resistance to mechanical stresses, and that its surfaces are highly polished, fro example chrome-plated, so as to afford a low coefficient of friction. Finally, it can be seen in Figure 8 that the longitudinally-inclined lower surface 222 of the wedge 22 is of transverse convex configuration to reduce the surface contact with the panels upon the introduction into the pile, whereby to facilitate said introduction. In order to avoid any damage to the panels, the side edges 322, 322' of the wedge are suitably rounded. The longitudinal central axis of the wedge 22 lies on the same imaginary vertical plane as the axis of the rod of said jack 13. Moreover, as it can be seen from Figure 3, the wedge 22 presents a transverse width at least equal to the diameter of the presser member 14.

The just-described assembly 19-20-22 can be reciprocated linearly by a fluid-operated double-acting jack 23, the body of which is pivoted at 24 to the plates 105-205 and the stem of which is fixed at 25 to an L-shaped member 26 wich is integral with the bushing 19. When the device is at rest, the jack 23 is extended so that the wedge 22 is retracted below the arm 5.

The jacks 6, 12 and 23 are connected to a pressurized fluid source through interposed solenoid valves controlled

0071864

by sensor and/or programming means, the general arrangement being such as to afford an automatic operation of the device as follows:

At the beginning of the operative cycle, the device is in the condition shown with solid lines in Figure 2 and in the corresponding condition of Figure 3, with the arm 5 slightly inclined downwards and the plate 14 above the pile of panels P and at the centre of the side of the pile facing the machining table to which the stacks of panels are to be cyclically transferred. The rod of the jack 13 is retracted. The operative cycle of the device of the invention comprises the lifting of the support lifting table until the top of the pile P will contact the presser plate 14 and the arm 5 and associated parts will be in the horizontal position shown with small-dashes lines in Figure 2. Upon reaching this condition, the lifting table will stop automatically. The portion of the pile P contacting the presser plate 14 will be subjected to the weight of the device and, therefore, will be compressed and brought into a planar condition. Thus, a portion A of said pile, having a pre-established thickness as indicated at B in Figure 6 and herein called "stack", will be defined by being comprised between the plate 14 and the top surface of the wedge 22. When the lifting table stops, the jack 23 is rectracted and, therefore, the wedge 22 is introduced into the pile. In Figure 7, showing this operative step, it can be seen that the side of the pile P, which is opposed to that penetrated by the wedge 22, is abutting against a structure 27 holding the panels in the correct position, against the force exerted thereon by the wedge. During the operative movement of the wedge 22, due to the inclination of the lower surface thereof, the arm 5 is pushed slightly upwards, and the latter movement will be permitted by the fact that now the jack 6 is not being fed. At the end of the introduction movement of the wedge 22, the jack 13 will be fed to be extended, whereby the presser plate 14 will clamp the stack of panels A which is held at the bottom by the wedge 22. Then, the movement of the carriage 1 away from the pile of panels will be performed, whereby the stack of panels A clamped between the presser plate 14 and wedge 22 will be transferred by the carriage towards the machining table. To avoid any undesired movement of the future top panels of the pile, due to the friction of the stack A against the underlying panels, suitable stop members are provided to prevent said movements. For example, two stop members could be provided, and they could be located at the sides of the device of the invention.

When the stack A has been brought onto the machining table, the following steps will be duly performed: lifting of the presser plate 14 by retraction of jack 13; extension of jack 23 with resulting retraction of the wedge from the lower side of the stack A; retraction of jack 6 to bring the arm 5 and associated parts into the position shown with dot-and-dash lines in Figure 2, well above the just-trasferred stack A. Thereafter, the carriage 1 can be moved again toward the pile, and the cycle will be repeated as described. When the carriage will be at the end of the stroke toward the pile P, the extension of the jack 6 will be automatically effected, whereby the arm 5 and associated parts will return to the position shown with solid lines in Figure 2 (corresponding position shown in Figure 5). The pile P is then lifted by an extent which is substantially the same as the thickness of the stack A so that a new stack of panels will be positioned above the plane of the wedge 22.

It is to be understood that the above description relates to a preferred embodiment of the invention, omitting the constructional details of either the electric system and fluid operating system and various safety and programming means, since they can be all easily conceived by any person skilled in the art. It is also to be understood that many changes and modifications, especially of constructional nature, can be made to the illustrated device. For example, the transfer carriage 1 could be arranged below the arm 5 and could operate within an opening formed in the machining table. As a further modification, if the panels are strongly undulated, the stack could be submitted to a stronger compression by the presser plate 14 by means of a suitable pressure created in the chamber of the jack 6. In this instance, as soon as the point of the wedge has penetrated into the pile, said pressure is released from the jack 6, so as to facilitate the introduction of the said wedge. These changes and modifications, which are anyway easily conceivable by those skilled in the art, are comprised within the scope of the invention as set forth above and as claimed hereinafter.

- 1 -

0071864

CLAIMS

1) A device for the automatic feeding of a stack (A) of a predetermined height of panels, particularly thin and flexible panels, to a machining line, by removing said stack (A) in one single action from the top of a pile (P), characterized by the fact that it comprises:

- a carriage (1) reciprocatingly movable along a rectilinear guide (2) presenting such a length and positioned in such a manner as to consent to the carriage (1) to move to-and-fro between the pile (P) and a receiving station of the machining line to which the stack (A) of panels is to be fed;
- a composite structure (3, 4, 5) carried by the said carriage (1)and capable of moving alternatingly, under the action of suitable control means (6), in vertical direction between a lifted and a lowered position;
- at least one presser member (14) associated to the said composite structure (3, 4, 5) and controlled by a fluid operated jack (13) in such a manner that whenever the carriage (1) is located in operative position in proximity of the pile (P) and the said composite structure (3, 4, 5) is located in its lowered position, the said presser member (14) comes to be positioned above the pile (P) and at the side of the pile facing the receiving station of the machining line, pile lifting means being provided whereby, whenever the presser member (14) is in the above mentioned position, the pile (P) is lifted until the pile itself, abutting by means of its top panel against the presser member, comes to be pressed in a substantial manner in such a manner that the portion of superposed panels underlying the presser member is compelled to assume a condition of planarity and close mutual contact;

- a wedge member (22) mounted on said composite structure (3, 4, 5) so as to be longitudinally movable thereon and having its upper surface arranged on a plane parallel to the plane containing the pressure surface of the presser member (14) in the pile pressing position, and further arranged with its longitudinal axis lying on the same vertical plane containing the axis of the presser member (14); whereby when the lifting of the pile (P) against the presser member (14) has been effected to the desired extent, the said wedge member (22) is inserted into the compressed portion of the pile (P) in such a manner that a stack (A) of a predetermined number of panels is comprised between the wedge member (22) and the overlying presser member (14);

whereby, after the insertion of the wedge member (22), the jack (13) controlling the presser member (14) is actuated so that the presser member clamps the stack (A) comprised between the said wedge and the said presser member, and the composite carriage (3, 4, 5) is moved away from the pile (P) of panels so as to transfer the clamped stack onto the receiving station of the machining line, where the presser member and the wedge member are brought again to their rest position thus freeing the transferred stack, and finally the composite structure is moved clear of the transferred stack and back to its starting operative position.

2) A feeding device according to claim 1, characterized by the fact that the composite structure (3, 4, 5) carrying the presser member (14) and the wedge member (22) is mounted in a swingable manner on the carriage (1) so as to swing in a vertical plane.

3) A feeding device according to claim 1, characterized by the fact that the wedge member (22) presents a transverse width at least equal to the diameter of the presser member (14).

4) A feeding device according to claim 1, characterized by the fact that the wedge member (22) presents, in plan view, a pointed configuration of its free end.

5) A feeding device according to claim 4, characterized by the fact that the wedge member (22) presents, in cross section, rounded edges (322) and a convex lower surface (222).

6) A feeding device according to claim 1, characterized by the fact that the wedge member (22) is constructed of material having high resistance to mechanical stresses and its surfaces are highly polished or lined with suitable anti-friction material.

- 4 -

0071864

7) A feeding device according to claim 1, characterized by the fact that adjustment members (11, 12) are provided for adjusting the position of the unit consisting of the presser member (14) and associated jack (13) so as to vary the height of the stack (A) of panels to be transferred.

8) A feeding device according to claim 1, characterized by the fact that the control means for moving the composite structure in vertical direction consist of at least one hydraulic jack (6).

0071864

P

*Fig.1*

P

14

22    *Fig.3*

14

P

*Fig.4*

0071864

Fig. 2

0071864

_Fig._ 5

_Fig._ 6

_Fig._ 7

_Fig._ 8

European Patent
Office

**EUROPEAN SEARCH REPORT**

0071864
Application number

EP 82 10 6741

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | B 65 H 3/32 |
| A | US-A-3 176 859 (PRAGER) *Column 2, line 18 to column 3, line 36; figures 1,2* | 1,4,7 | B 65 G 59/02 |
| | --- | | |
| A | CH-A- 582 104 (SCHNEIDER) *Column 2, line 40 to column 3, line 48; figures 1,2* & US - A - 4 055 258 | 1,3,4, 7,8 | |
| | --- | | |
| A | US-A-2 940 616 (REED) *Figure 3* | 2,8 | |
| | --- | | |
| A | US-A-2 854 150 (SHEA) *Column 2, lines 4 to 9; figure 2* | 5,6 | |
| | -- --- | | |

TECHNICAL FIELDS
SEARCHED (Int. Cl. 3)

B 65 G
B 65 H

The present search report has been drawn up for all claims

| Place of search | Date of completion of the search | Examiner |
|---|---|---|
| THE HAGUE | 03-11-1982 | LUTZ C.H.A. |